# EUROPEAN PATENT SPECIFICATION

(11) **EP 1 764 586 B1**
(45) Date of publication and mention of the grant of the patent: **23.04.2008**
(21) Application number: 06012503.6
(22) Date of filing: 19.06.2006
(51) Int. Cl.: G01F 1/24, H01H 35/40

(54) **Flow-control switch device for gas-fired wall boilers**
Durchflusssteuerschaltvorrichtung für wandmontierte Gasdurchlauferhitzer
Dispositif d'interruption du contrôle de circulation des chauffe-eau muraux à allumage au gaz

(30) Priority: 15.09.2005 IT mi20051701
(43) Date of publication of application: 21.03.2007
(73) Proprietor: Fitre S.P.A., 20142 Milano (IT)
(72) Inventor: Borroni, Alberto, 20142 Milano (IT)
(74) Representative: Coloberti, Luigi

(56) References cited:
- US-B1- 6 339 959
- US-B2- 6 898 984

## Description

### BACKGROUND OF THE INVENTION

This invention refers to a magnetically actuated flow-control switch device of vertical float-type, for operating wall-mounted gas-fired boilers, according to the preamble of claim 1. In particular the invention relates to a flow-control device of the aforementioned type, for controlling the ignition of gas-fired boilers for domestic use, designed to indifferently supply both hot water for a heating system and hot water for domestic use.

### STATE OF THE ART

In the case of gas-fired wall boilers, each time hot water is required it is necessary to rapidly control the ignition of the burner, as soon as a minimum volume of water begins to flow, after exceeding an operative threshold established by specific regulations or on the basis of requests by the manufacturers.

Usually, a magnetically actuated flow-control switch device of float-type comprises a tubular body of plastic material or other suitable non magnetically conductive material, defining a longitudinal duct between an inlet pipe fitting and an outlet pipe fitting for the fluid, within which a flow sensing spool comprising a float and a permanent magnet slides; the float is entrained by the flowing fluid to operate a reed-type magnetic switch, providing control signals to control for example the ignition of a gas burner as soon as a light flow of water, caused for example by turning on a tap, or necessary for starting up a circulation pump of the fluid in a heating system, is flowing along the same flow-control device.

In flow-control device of the aforementioned kind, there are some-times different requirements in contrast with one another, which must be fulfilled without forfeiting the operative reliability and the possibility of an easy installation of the flow-control device in extremely limited spaces.

A flow -control device of the aforesaid type is described for example in GB-A-2.243.953. The flow control device comprises a tubular body, of plastic material, provided with fastening flanges at the fluid inlet and outlet sides, and an internal float appropriately shaped to define a peripheral path for the fluid; the float comprises a permanent magnet for operating a reed switch embedded into the tubular body at the moulding time.

Other solutions consist of a body made in several parts, comprising threaded or flanged metal pipe fittings at the fluid inlet and outlet ends, as for example shown in DE-A-3941981.

US-A-6.339.959 and US-A-6.898.984 in turn illustrate flow-control devices comprising a tubular body within which a hollow magnetic float slides; the float is provided with a permanent magnet having an axial hole for the passage of the fluid and comprises a cylindrical outer surface which extends along the entire length, or between annular flanges at the two ends.

Solutions of this kind prove to be unsuitable for a flow-control device designed to be used on small gas-fired wall boilers; in fact, in addition to being structurally complex and consequently more expensive, due to the particular configuration of the tubular body and the float, it is not possible to reduce the overall dimensions of the entire flow-control device, without jeopardising its operative sensitivity and reliability.

In particular, the limited length of the magnet, necessary to avoid making the float excessively heavy, without jeopardising its sensitivity, has a negative effect on the operative range of the magnet for actuation of the reed switch. Moreover, because of the simple cylindrical or flanged shape of the float, it is not possible to sufficiently reduce and/or modify the operative threshold of the flow control device, without endangering its operative reliability.

The overall dimensions still remain excessive and unsuitable or somewhat impracticable for flow control devices designed to be fitted into narrow spaces or in wall-mounted boilers of small dimensions.

### OBJECTS OF THE INVENTION

The main object of the invention is to provide a float-type flow-control device of the aforementioned type, which is structurally simple and of limited dimensions, while nevertheless maintaining a high degree of sensitivity and operative reliability in controlling a gas-fired boiler.

A further object of the invention is to provide a float-type flow-control device, whereby it is possible, at the designing, to adapt and/or modify its operative threshold while maintaining the general features and the overall dimensions of the device unchanged.

A still further object is to provide a float-type flow control device having a high degree of magnetic sensitivity, within a wide operative range of a reed switch, and to replace and/or change the position of the aforesaid reed switch also with the device already assembled in a working line.

### BRIEF DESCRIPTION OF THE INVENTION

The above can be achieved by means of a flow-control switch device according to claim 1.

In particular, according to the invention a float-type flow-control switch device has been provided, comprising: a hollow casing of plastic material, defining a longitudinal duct having an inner surface axially extending between an inlet and an outlet for a fluid; a magnetic float sliding within said duct under the entraining action of the fluid, to generate a magnetic field for operation of a reed switch, characterised in that the float has an elongated body having a longitudinal flow hole for the fluid, axially extending between its fore and rear ends; and

in that said body of the float comprises a fore cylindrical portion, and a rear conical portion defining, together with the inner surface of the longitudinal duct, an annularly shaped thrust chamber movable with the float.

### BRIEF DESCRIPTION OF THE DRAWINGS

These and further objects and features of the flow-control switch device according to the invention, will be more clearly evident from the following description of a preferential embodiment, and the accompanying drawings, in which:
Fig. 1 shows a side view of the flow-control device;
Fig. 2 shows a longitudinal cross-sectional view of figure 1;
Fig. 3 shows a cross-sectional view along the line 3-3 of figure 2, with the reed switch removed;
Fig. 4 shows a detail of figure 2, designed to illustrate the operative principle;
Fig. 5 shows an enlarged detail of figure 3, relating to a different embodiment of the float.

### DETAILED DESCRIPTION OF THE INVENTION

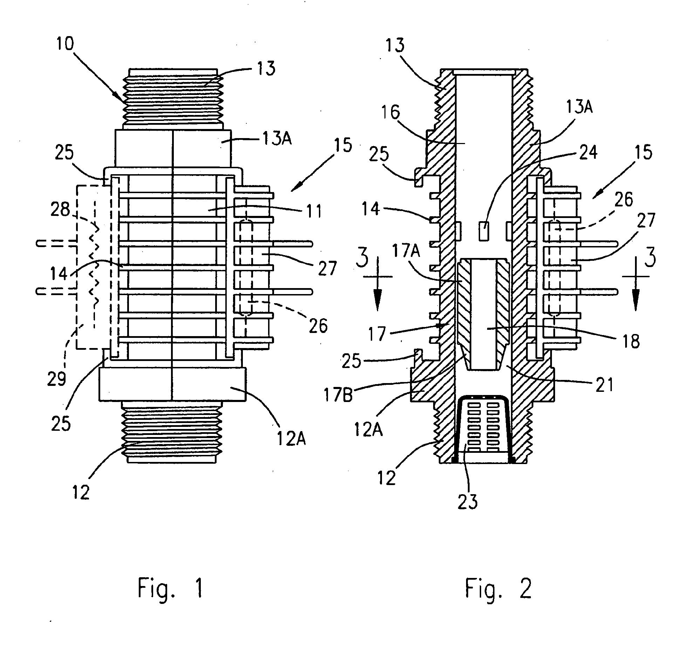

As it can be seen from figures 1, 2 and 3, the flow-control switch device, indicated as a whole by reference 10, comprises a hollow casing 11 of plastic material, moulded in one piece with an inlet threaded pipe fitting 12 and an outlet threaded pipe fitting 13, for the inlet and outlet of a fluid, as shown.

The casing 11 of the flow-control device is obtained in a single moulding together with the two threaded pipe fittings 12 and 13, by means of plastic material capable of withstanding thermal and mechanical stresses, and hydrolysis, in particular using plastic material suitable for liquid foodstuffs.

The casing 11 of the flow-control device has a polygonal cross sectional shape, for example hexagonal, provided with a plurality of cross stiffening ribs 14, to make the casing 11 of the device highly resistant to the stresses caused by the water hammering that may occur in a hydraulic circuit when the fluid is suddenly shut off; the polygonal shape of the casing 11 and the stiffening ribs 14, also provide the possibility of removably positioning a reed switch 15 outwardly the same casing, as explained further on.

The casing 11 of the flow-control switch device comprises a longitudinal duct 16 having an inner cylindrical surface which extends from the inlet threaded pipe fitting 12 to the outlet pipe fitting 13 for the inlet and outlet of the fluid.

A movable magnetic element 17 for operating the reed switch 15 is slidably arranged inside the duct 16 to be vertically moved by the fluid thrust and its own weight in the duct 16.

The movable magnetic element 17, also referred to as "float", is designed to be entrained by the stream of the fluid which flows through the duct 16; it has an elongated body comprising a fore cylindrical portion 17A, and a rear portion 17B having substantially a conical shape, with the taper facing towards the inlet threaded pipe fitting 12.

The float 17 has an elongated body provided with an axial hole 18 for the passage of the fluid, and external guiding and centering ribs 19 which extend in a longitudinal direction to the cylindrical portion 17A of the float body; in this way, between the outer surface of the float 17 and the inner surface of the longitudinal duct 16 a narrow annular hollow space 20 is created, which allows the passage of a film of fluid, which together with the guiding ribs 19 makes it possible to reduce the internal friction forces, thereby increasing the sensitivity of the flow-control device.

The float 17 is obtained by moulding from magnetic plastic material, for example a polymeric material comprising a ferrite filler, or a filler of suitable magnetic material in powder form.

The magnetic float 17 is permanently magnetised axially along its entire length; in this way it is possible to obtain a magnetic float of reduced dimensions, which is extremely light in weight and therefore highly sensitive to the flow of the fluid, having at the same time a magnetic field strong enough to operate the reed switch 15.

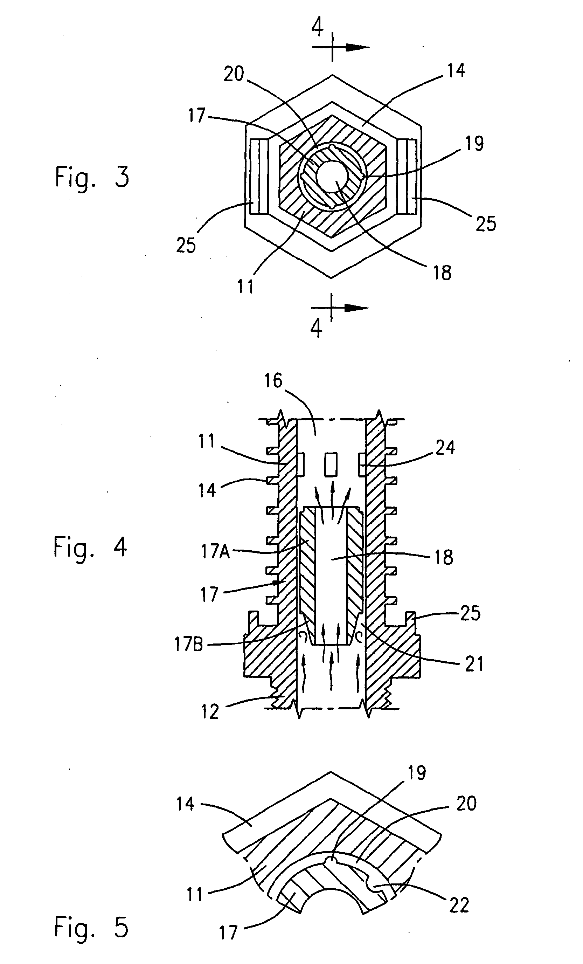

As mentioned previously, the body of the float 17 at its rear end is provided with a conical portion 17B which, together with the inner cylindrical surface of the longitudinal duct 16, defines an annular chamber 21 movable with the float itself under the entraining action of the fluid, as shown in the detail of figure 4.

By appropriately choosing, during the designing, the inner diameter of the hole 18 in the float, and the angle of the conical surface of the portion 17B in respect to the longitudinal axis of the cylindrical body of the float, it is possible to vary the minimum flow rate, or the operative threshold of the flow-control device, both at the beginning and the stop of the circulation of the fluid, and therefore the operative threshold of the reed switch 15.

Purely by way of information, for flow-control switch devices intended for use in small wall-mounted boilers, the diameter of the inner hole of the float 17 can range from 4 to 8 mm, while the angle of the conical part, can range from 10° to 45°.

From tests carried out, it has been observed that by appropriately choosing the angle of the conical part and of the inner diameter of the hole 18 in the float, it is possible to obtain minimum operative thresholds for flow rates of about 1,5 to 1,7 litres/minute at the beginning of flow circulation, and of about 2,3 to 2,5 litres/minute during the shut-off, while maintaining a high and constant degree of reliability and operation of the flow-control device.

The detail of figure 5 shows the possibility of making longitudinal slots 22 on the outer surface of the float body 17 to improve the circulation of the fluid film along the annular space 20, and change the operative thresholds of the flow-control device.

Reference number 23 in figure 2 has been used to indicate a cup-shaped filter in correspondence with the inlet pipe fitting 12; the filter 23 is made in one piece by moulding from plastic material which, in addition to retaining any impurities that may be present in the fluid, constitutes a bottom stop member for the float 17; otherwise, the upper stop member consists of several ribs or protrusions 24 inside the duct 16, as shown in figures 2 and 4.

In conformity with a further feature of the flow-control switch device according to this invention, the reed switch 15 is removably fitted and/or differently positionable outside the casing 11 of the flow-control device.

In particular, as shown in figures 1 and 2, two confronting, and transversally directed, "L"-shaped tabs 25 are obtained by moulding on one or two opposite faces of the polygonal casing 11. In turn, the reed switch 15 comprises a bulb 26 containing the electric contacts that can be magnetically operated by the float 17; the bulb 26 is housed in a plastic container 27, which can be arranged by simply sliding it within the tabs 25; this solution permits an easy assembling and/or replacement of the reed switch 15, in the event of failure or malfunctioning, both before and after the application of the device, without having to interfere with any part of the hydraulic system, the boiler or the equipment on which it has been assembled, thereby facilitating repairs; this solution also makes it possible to easily adapt the choice of the reed switch to different technical requirements of the electronics controlling the equipment.

Whenever heating of the flow meter is required, in place of or in combination with a reed switch 15 on one side of the flow-control device, it is possible to fit a heating element 28, in a casing 29 with a slide coupling, using the other tabs 25, as shown at the left-hand side of fig. 1.

From what has been described and shown in the accompanying drawings, it will be clear that a magnetic float-type flow-control switch device has been provided, characterised by extreme structural simplicity and a high operative degree and reliability; it is understood however that what has been described and shown in the accompanying drawings has been given purely by way of example in order to illustrate the innovative features of the flow-control device according to the invention. Therefore, other modifications or variations may be made without thereby deviating from the claims, by providing for example both the threaded pipe fittings 12 and 13 with a hexagonal portions 12A and 13A for engaging with a same or different tightening wrenches.

## Claims

1. A float-type flow-control switch device comprising:
a hollow casing (11) of plastic material, defining a longitudinal duct (16) having an inner surface axially extending between inlet and outlet apertures (12, 13) for a fluid;
a magnetic float (17) sliding within said duct (16) under the entraining action of the fluid, to generate a magnetic field, and a reed switch (26) actuated by the magnetic field of the float (17), **characterised in that** the float (17) has an elongated body having a longitudinal flow hole (18) for the fluid axially extending between fore and rear ends; and **in that** the body of the float (17) comprises a fore cylindrical portion (17A), and a rear conical portion (17B), the latter defining together with the internal surface of the longitudinal duct (16) an annularly shaped thrust chamber (21) movable with the float.

2. The flow-control device according to claim 1, **characterised in that** the float body (17) is moulded from magnetic plastic material.

3. The flow-control device according to claim 1, **characterised in that** the outer surface of the rear conical portion (17B) of the float (17) defines, with respect to a longitudinal axis of the float (17), an angle ranging from 10° to 45°.

4. The flow-control device according to claim 1, **characterised in that** the diameter of the flow hole (18) of the float (17) is ranging from 4 to 8 mm.

5. The flow-control device according to claim 1, **characterised by** comprising threaded pipe fittings (12, 13) moulded in one piece with the casing (11) of the flow-control device (10), at the fluid inlet and outlet ends.

6. The flow-control device according to claim 5, **characterised in that** each threaded pipe fitting (12, 13) comprises a hexagonal shaped portion (12A, 13A) for engaging with a tightening wrench.

7. The flow-control device according to claim 5, **characterised in that** the fluid inlet and outlet pipe fittings (12, 13) are shaped to engage with different tightening wrenches.

8. The flow-control device according to claim 1, **characterised in that** the outer surface of the float (17) is provided with longitudinal guiding ribs (19).

9. The flow-control device according to claim 1, **characterised in that** the outer surface of the float is provided with longitudinal slots (22).

10. The flow-control device according to claim 1, **characterised in that** the casing (11) of the device (10) is provided with a plurality of stiffening ribs (14).

11. The flow-control device according to claim 1, **characterised in that** the casing (11) of the device (10) has a polygonal shape.

12. The flow-control device according to claim 1, **characterized in that** the reed switch (26) comprises a bulb for electric contacts, inside an housing (27), the casing (11) of the flow-control device (10) being provided, on at least one side, with facing tabs (25) to engage the housing (27) of the reed switch (26).

13. The flow-control device according to claim 1, **characterised by** comprising a cup-shaped filter (23), at the inlet threaded pipe fitting (12), defining a bottom stop member for the float (17).

14. The flow-control device according to claim 13, **characterised by** comprising an upper stop member for the float (17) provide by protrusions (24) inside the longitudinal duct (16).

15. The flow-control device according to claim 1, **characterised by** comprising a removable reed switch (26) on a side, and a removable heating element (28) on another side of the casing (11) of the flow control switch device (10).

## Patentansprüche

1. Eine schwimmkörperartige Durchflusssteuerschaltvorrichtung umfassend:
- ein hohles Gehäuse (11) aus Kunststoff, welches einen Längskanal (16) definiert, welcher eine innere, sich zwischen Ein- und Auslassöffnung (12, 13) für eine Flüssigkeit erstreckende Oberfläche aufweist,
- ein magnetischer Schwimmkörper (17), welcher innerhalb des besagten Kanals (16) unter der mitreißenden Einwirkung der Flüssigkeit gleitet, um ein magnetisches Feld zu erzeugen, und ein Reed-Schalter (26), welcher durch das magnetische Feld des Schwimmkörpers (17) betätigt wird,
**dadurch gekennzeichnet, dass** der Schwimmkörper (17) einen verlängerten Körper hat, welcher eine, sich zwischen den Vorder- und Hinterenden axial erstreckende Längsflussbohrung (18) für die Flüssigkeit aufweist; und dass der Körper des Schwimmkörpers (17) einen vorderen zylindrischen Teil (17A) und einen hinteren konischen Teil (17B) umfasst, wobei der letztere zusammen mit der inneren Oberfläche des Längskanals (16) eine ringförmige Druckkammer (21) definiert, welche mit dem Schwimmkörper beweglich ist.

2. Die Durchflusssteuervorrichtung nach Anspruch 1,
**dadurch gekennzeichnet, dass** der Schwimmkörper (17) aus magnetischem Kunststoff gestaltet ist.

3. Die Durchflusssteuervorrichtung nach Anspruch 1,
**dadurch gekennzeichnet, dass** die äußere Oberfläche des hinteren konischen Teils (17B) des Schwimmkörpers (17) einen Winkel, in Bezug auf eine Längsachse des Schwimmkörpers (17), definiert, welcher von 10° - 45° reicht.

4. Die Durchflusssteuervorrichtung nach Anspruch 1,
**dadurch gekennzeichnet, dass** der Durchmesser der Flussbohrung (18) des Schwimmkörpers (17) von 4 bis 8 mm reicht.

5. Die Durchflusssteuervorrichtung nach Anspruch 1,
**gekennzeichnet durch** Umfassen von Gewindeanschlussrohrstücken (12, 13), welche einteilig mit dem Gehäuse (11) der Durchflusssteuervorrichtung (10) geformt sind, an den Flüssigkeitsein- und auslassenden.

6. Die Durchflussteuervorrichtung nach Anspruch 5,
**dadurch gekennzeichnet, dass** jedes Gewindeanschlussrohrstück (12, 13) einen sechskantförmigen Anteil (12A, 13A) zum Angreifen mit einem Anzugsschraubenschlüssel umfasst.

7. Die Durchflusssteuervorrichtung nach Anspruch 5,
**dadurch gekennzeichnet, dass** die Flüssigkeitseinlass- und Auslassrohranschlussstücke (12, 13) gestaltet sind, um mit unterschiedlichen Anzugsschraubenschlüsseln zusammenzuwirken.

8. Die Durchflusssteuervorrichtung nach Anspruch 1,
**dadurch gekennzeichnet, dass** die äußere Oberfläche des Schwimmkörpers (17) mit Längsführungsrippen (19) versehen ist.

9. Die Durchflusssteuervorrichtung nach Anspruch 1,
**dadurch gekennzeichnet, dass** die äußere Oberfläche des Schwimmkörpers mit Längsnuten (22) versehen ist.

10. Die Durchflusssteuervorrichtung nach Anspruch 1,
**dadurch gekennzeichnet, dass** das Gehäuse (11) der Vorrichtung (10) mit einer Vielzahl von Versteifungsrippen (14) versehen ist.

11. Die Durchflusssteuervorrichtung nach Anspruch 1,
**dadurch gekennzeichnet, dass** das Gehäuse (11) der Vorrichtung (10) eine polygone Form aufweist.

12. Die Durchflusssteuervorrichtung nach Anspruch 1,
**dadurch gekennzeichnet, dass** der Reed-Schalter (26) einen Kolben für elektrische Kontakte innerhalb eines Gehäuses (27) aufweist, wobei das Gehäuse (11) der Durchflusssteuervorrichtung (10) zumindest auf einer Seite mit zugewandten Nasen zum Fassen des Gehäuses (27) des Reed-Schalters (26) versehen ist.

13. Die Durchflusssteuervorrichtung nach Anspruch 1,
**gekennzeichnet durch** Umfassen eines tassenförmigen Filters (23) im Bereich des Einlassgewinderohranschlussteils (12), welcher einer unteres Anschlagselement für den Schwimmkörper (17) definiert.

14. Die Durchflusssteuervorrichtung nach Anspruch 13,
**gekennzeichnet durch** Umfassen eines oberen Anschlagselements für den Schwimmkörper (17), zur Verfügung gestellt **durch** Vorsprünge (24) innerhalb des Längskanals (16).

15. Die Durchflusssteuervorrichtung nach Anspruch 1,
**gekennzeichnet durch** Umfassen eines entfernbaren Reed-Schalters (26) auf einer Seite und eines entfernbaren Heizelements (28) auf einer anderen Seite des Gehäuses (11) der Durchflusssteuerschaltvorrichtung (10).

## Revendications

1. Dispositif de commutateur de régulation d'écoulement du type à flotteur, comprenant :
un boîtier creux (11) en matière plastique, définissant un conduit longitudinal (16) ayant une surface intérieure qui s'étend axialement entre des ouvertures d'entrée et de sortie (12, 13) pour un fluide ;
un flotteur magnétique (17) glissant à l'intérieur dudit conduit (16) sous l'action d'entraînement du fluide, pour générer un champ magnétique, et un contact en ampoule (26) actionné par le champ magnétique du flotteur (17), **caractérisé en ce que** le flotteur (17) comporte un corps allongé ayant un trou longitudinal d'écoulement (18) pour le fluide s'étendant axialement entre des extrémités avant et arrière; et **en ce que** le corps du flotteur (17) comporte une partie avant cylindrique (17A) et une partie arrière conique (17B), cette dernière définissant, conjointement avec la surface interne du conduit longitudinal (16), une chambre de poussée (21), de forme annulaire, mobile avec le flotteur.

2. Dispositif de régulation d'écoulement selon la revendication 1, **caractérisé en ce que** le corps (17) de flotteur est en matière plastique magnétique moulée.

3. Dispositif de régulation d'écoulement selon la revendication 1, **caractérisé en ce que** la surface extérieure de la partie arrière conique (17B) du flotteur (17) définit, par rapport à un axe longitudinal du flotteur (17), un angle allant de 10° à 45°.

4. Dispositif de régulation d'écoulement selon la revendication 1, **caractérisé en ce que** le diamètre du trou d'écoulement (18) du flotteur (17) va de 4 à 8 mm.

5. Dispositif de régulation d'écoulement selon la revendication 1, **caractérisé en ce qu'**il comporte des raccords filetés (12, 13) de tuyaux moulés d'un seul tenant avec le boîtier (11) du dispositif de régulation d'écoulement (10), aux extrémités d'entrée et de sortie de fluide.

6. Dispositif de régulation d'écoulement selon la revendication 5, **caractérisé en ce que** chaque raccord fileté (12, 13) de tuyau comporte une partie de forme hexagonale (12A, 13A) permettant de mettre en place une clé de serrage.

7. Dispositif de régulation d'écoulement selon la revendication 5, **caractérisé en ce que** les raccords (12, 13) de tuyaux d'entrée et de sortie de fluide sont agencés pour coopérer avec différentes clés de serrage.

8. Dispositif de régulation d'écoulement selon la revendication 1, **caractérisé en ce que** la surface extérieure du flotteur (17) est pourvue de nervures longitudinales de guidage (19).

9. Dispositif de régulation d'écoulement selon la revendication 1, **caractérisé en ce que** la surface extérieure du flotteur est pourvue de rainures longitudinales (22).

10. Dispositif de régulation d'écoulement selon la revendication 1, **caractérisé en ce que** le boîtier (11) du dispositif (10) est pourvu d'une pluralité de nervures de raidissement (14).

11. Dispositif de régulation d'écoulement selon la revendication 1, **caractérisé en ce que** le boîtier (11) du dispositif (10) a une forme polygonale.

12. Dispositif de régulation d'écoulement selon la revendication 1, **caractérisé en ce que** le contact en ampoule (26) est constitué par une ampoule pour contacts électriques, à l'intérieur d'un logement (27), le boîtier (11) du dispositif de régulation d'écoulement (10) étant pourvu, sur au moins une face, de languettes (25) en regard l'une de l'autre pour coopérer avec le logement (27) du contact en ampoule (26).

13. Dispositif de régulation d'écoulement selon la revendication 1, **caractérisé en ce qu'**il comprend un filtre (23) en forme de cuvette, sur le raccord fileté d'entrée (12) pour tuyau, définissant un élément d'arrêt inférieur pour le flotteur (17).

14. Dispositif de régulation d'écoulement selon la revendication 13, **caractérisé en ce qu'**il comprend un élément d'arrêt supérieur pour le flotteur (17) constitué par des saillies (24) à l'intérieur du conduit longitudinal (16).

15. Dispositif de régulation d'écoulement selon la revendication 1, **caractérisé en ce qu'**il comprend un contact en ampoule amovible (26) sur un côté, et un élément chauffant amovible (28) sur un autre côté du boîtier (11) du dispositif de commutateur (10) de régulation d'écoulement.
